# EUROPEAN PATENT APPLICATION

(11) **EP 3 527 909 A1**
(43) Date of publication of application: **21.08.2019**
(21) Application number: 18157275.1
(22) Date of filing: 16.02.2018
(51) Int. Cl.: F24S 25/11

(54) **ASSEMBLY SYSTEM FOR MOUNTING PHOTOVOLTAIC PANELS AND METHOD OF PROVIDING AN ASSEMBLY SYSTEM FOR MOUNTING PHOTOVOLTAIC PANELS**

(71) Applicant: W. Giertsen AS, 5165 Laksevåg-Bergen (NO)
(72) Inventor: Pietrzak, Arnd, 10435 Berlin (DE)
(74) Representative: Patentanwälte Bressel und Partner mbB

(57) **Abstract**

The invention relates to an assembly system (1) for mounting photovoltaic panels, with an assembly frame (2), wherein said assembly frame (2) comprises connecting means (11) by which the assembly frame (2) is attachable to at least one complementary connecting means (101) of a freight container (100). Further, the invention relates to a method of providing such an assembly system (1).

## Description

The present invention relates to an assembly system for mounting photovoltaic panels and a method of providing an assembly system for mounting photovoltaic panels.

In rural areas and less developed regions decentralised energy solutions become increasingly popular. One way to provide electricity in these places is using photovoltaic panels which are mounted on top of freight containers. Freight containers are ubiquitously used for transport, so they are available in a wide range and at low cost. Existing systems, however, require extensive modification of the freight container itself to prepare the assembly system and the container for mounting the photovoltaic panels, such as welding parts of the assembly system to the container.

It is an object of the present invention to provide an assembly system for mounting photovoltaic panels and a method of providing an assembly system for mounting photovoltaic panels wherein modification of the freight container is not required.

The objective is solved by an assembly system according to the subject matter of claim 1 and a method according to the subject matter of claim 15. Preferred embodiments are given in the dependent claims.

In particular, an assembly system for mounting photovoltaic panels is provided, with an assembly frame, wherein said assembly frame comprises connecting means by which the assembly frame is attachable to at least one complementary connecting means of a freight container. The assembly system according to the invention has the advantage that complementary connecting means of the freight container are used and modifications of the freight container, such as welding components of the assembly system to the freight container, are not required.

Further, a method of providing an assembly system for mounting photovoltaic panels, comprising the steps of: assembling and attaching an assembly frame to a freight container by attaching connecting means of the assembly frame to at least one complementary connecting means of the freight container.

A freight container usually comprises cuboid container-frame structure. This container-frame structure defines the edges of the freight container. Thus the container-frame structure and the container itself comprises a bottom side, a top side and lateral sides joining the bottom side and the top side. The freight container also comprises a front side and rear side joining the lateral sides as well as the bottom and top. Usually all six faces of the freight container are closed. The bottom side comprises a bottom wall on the outside and usually a floor on the inside. The top side comprises a roof, the lateral sides comprise sidewalls and the front and rear side comprise end walls. Many freight containers comprise doors at least at the front side. Some comprise doors at the front side and at the rear side and some as well in the lateral sides. The lateral sides have an extension parallel to bottom side and top side that is longer than the extension of front side and rear side parallel to bottom side and top side. The different walls and the roof are often made of corrugated steel sheets. The container-frame structure usually comprises corner castings according to the standard ISO 1161:2016-07 or an earlier version of the same standard.

The connection(s) between the connecting means of the assembly frame and the complementary connecting means of the freight container are of a form closure and/or a force closure type.

For example, the parts of the assembly frame are transported together with the freight container to the place where the photovoltaic panels are to be mounted. It is even possible that the parts of the assembly frame are transported inside the freight container to be readily available for mounting when the freight container reaches its destination. The freight container is then set to the position where the panels are to be mounted and the assembly frame of the assembly system is attached to the freight container. After mounting, it is possible to use the space inside the freight container to host electrical equipment, e.g. alternators, batteries and/or control equipment for the photovoltaic panels.

In one embodiment, the assembly frame comprises multiple support portions, wherein each support portion comprises at least one girder. The support portions can then be distributed on a lateral side of the freight container. Preferably, the support portions are distributed on both lateral sides of the freight container, such that the photovoltaic panels can be mounted along each of the lateral sides of the freight container. More preferably, the support portions are distributed at equally spaced distances along the lateral side(s) of the freight container.

In another embodiment, at least one of the support portions has a vertically oriented side member on which at least some of the connecting means are arranged, and wherein said connecting means have at least one locking element which can be attached and locked to a corner casting of the freight container.

Preferably, two locking elements to be attached and connected to a top corner casting and a corresponding bottom corner casting of the freight container are provided on the side member. This way the side member extends vertically at least from the top corner casting to the corresponding bottom corner casting of the freight container and can be securely attached and locked to the freight container. The side member then provides a stable fixing for other elements of the assembly frame.

Preferably, the girder of a support portion is directly mounted on top of the side member of that support portion, such that it rests partly on the side member.

Usually, the corner castings of freight containers have an oval-shaped opening used for attaching lock units of lashing when transporting the freight containers. In one embodiment, the at least one locking element comprises at least one oval disc, wherein said oval disc can be inserted into and locked to the correspondent corner casting of the freight container. The oval disc of the locking element is rotated such that it can be inserted into the oval-shaped opening of the corner casting of the freight container. After insertion, the oval disc is rotated by 90° such that it can be engaged with the corner casting, for example by tightening a screw. This provides a fast, flexible, cheap and secure way to attach and lock the side member and hence the assembly frame to the freight container. After attaching and locking it is still possible to unlock the locking element and remove it from the freight container without any damages to the freight container.

In one embodiment, the at least one support portion further comprises at least one cantilever attached to the side member and which is extending sideward from the side member and the freight container. The cantilever provides further stability to the assembly frame, especially in directions extending sideward from the freight container.

Preferably, the side member comprises multiple or continuously adjustably connecting points along its vertical extension, such that the at least one cantilever can be connected to the side member at each of the connecting points. This way a height level of the at least one cantilever can be adjusted to an uneven ground level by simply using a different connecting point on the side member.

In one embodiment, one of the at least one cantilever is attached to a top portion of the side member and another of the at least one cantilever is attached to a bottom portion of the side member, wherein opposite ends of the two cantilevers are arranged, such that a triangle or a triangle-like shape is formed by the two cantilevers and the side member.

As described above, the top portion and the bottom portion of the side member can comprise multiple connecting points such that a connection can be flexibly adjusted to different ground levels. Further, also the cantilevers can comprise multiple or continuously adjustable connecting points, such that the connection can be adjusted to different positions on the cantilevers.

The use of cantilevers increases the base area of the assembly system with respect to tilting of the freight container as well as of the assembly system as a whole. Especially diagonal cantilevers attached to the top of the respective side members stabilize the freight container against tilt.

The use of a triangular construction comprising a horizontal cantilever and a diagonal cantilever being attached to the respective side member ensures sufficient stability to enable the use of the assembly system without the need for foundations and ballast. The cantilevers can be dimensioned in such a fashion that normal wind loads, including push and pull forces can be handled by the assembly system without the need of foundations and ballast in the freight container.

In one preferred embodiment said one of the at least one cantilever and/or said another of the at least one cantilever are dimensioned such that the assembly system can withstand push and pull forces induced by wind without the need of foundations and without the need of ballast. This holds true for normal wind loads that are adapted to the local building requirements. Especially for inland areas the dimensioning requirement for of the cantilevers can be met easily.

In one embodiment, at least two of the support portions are connected and attached to each other by at least one purlin. The purlin is part of the assembly frame and extends in a direction parallel to the lateral side of the container. Preferably, all the support portions are connected to the adjacent support portions by purlins. On top of the purlins the photovoltaic panels are mounted. The spacing between adjacent purlins is hence chosen according to a dimension of the photovoltaic panels and/or further construction elements used for mounting the photovoltaic panels. Even if a support portion does not have an adjacent support portion on one of its sides, the purlin can extend beyond the support portion on that side. This way the purlin can project beyond an end support portion and provide additional capacity for mounting photovoltaic panels without the need for an additional support portion.

In another embodiment, each of the support portions comprises a vertical post, wherein the vertical post is attached to the corresponding girder. The vertical post is located some distance apart from the freight container and is used as support for the girder of the respective support portion. The connection between the vertical post and the girder can also be formed by arranging additional elements between the vertical post and the girder.

If the respective support portion comprises at least one cantilever, the vertical post is preferably attached to the at least one cantilever corresponding with the support portion. If two cantilevers are part of the portion, opposite ends of the two cantilevers are connected to the vertical post. This way a triangle-like shaped construction is created which provides enhances stability, especially against a wind load charging on the assembly frame and/or the freight container. This construction ensures that the assembly system can be used without any need for foundations and/or the need of ballast.

In a preferable embodiment, a bottom end of the vertical post comprises an adjustable base, wherein an extension of said adjustable base can be adjusted with respect to a vertical direction. This allows to adjust the level of the base to uneven ground and hence provide further stability to the assembly system. The bases of multiple support portions can then be flexibly adjusted to the ground around the freight container, such that the assembly frame can be stabilized and leveled on nearly arbitrarily shaped ground. This offers additionally flexibility especially in rural areas where the ground level is uneven.

To further increase the flexibility in respect to an adjustment to different grounds, auxiliary elements, such as wedges and/or spacers, can be used to support the adjustable base. This is especially useful, if the ground is unsolid and sandy. Spacer plates and alike can then form a firm ground.

In a particular advantageous embodiment, the vertical posts of adjacent support portions are connected to each other by at least one bracket. This bracket provides additional stability to the assembly frame and hence the assembly system, especially in a direction parallel to the lateral side of the freight container.

In one embodiment, the assembly frame comprises a support portion for each corner post of the freight container. These support portions on the corner posts form end support portions of the assembly frame. In addition, the assembly frame preferably comprises support portions in between these end support portions. These intermediate support portions provide stability in between the end support portions and additional girders are provided, onto which the purlins can be mounted. Most preferably, the assembly frame consists of these end support portions and intermediate support portions which are equally spaced and a number of intermediate support portions is selected according to a length of the freight container. A larger length then corresponds with a larger number of intermediate support portions within the assembly frame.

In an advantageous embodiment, the freight container is a standard intermodal container. These containers come in standardised dimensions, such that the assembly frame can be easily designed and the elements can be easily compiled. For example, the container can be a standard 20-foot container, a standard 30-foot container, or a standard 40-foot container. The "foot-size" determines the length along the lateral sides of the freight container. The number of support portions of the assembly frame are then selected according to the length of the container. The dimensions of the elements of the assembly frame are then chosen according to the dimensions of the standard intermodal freight container to be used, e.g. the spacing between the connecting means on the top of the side member and on the bottom of the side member are then chosen such that they fit into the corner castings of such a standard intermodal freight container.

In a preferable embodiment, at least one of the support portions comprises at least one top member, said top member comprising fastening means which can be engaged with at least one roof top end portion alongside the freight container. For example, such a roof top end portion can be a top side rail of the freight container. The advantage is, that the top member can be attached to the freight container at almost any position along the lateral side the freight container. This way the intermediate support portions can be flexibly located at arbitrary positions along the lateral sides and elements of the support portions can be attached to the freight container via the top member. Preferably, the top member has an extension such that it can be positioned across the roof top of the freight container from lateral side to lateral side. It is then advantageous to have two fastening means to fasten the top member to roof top end portions of both lateral sides of the freight container.

In one embodiment the fastening means comprise a hook which can be fastened to the at least one roof top end portion of the freight container by an adjustable screw. For example, the hook is then hooked under the top side rail of the freight container. Then the screw is tightened such that the hook tightly embraces the top side rail. If the top member reaches across the roof top of the freight container and is fastened in the described way to both top side rails the top member is tightly locked to the freight container and can thus add additional stability to its respective portion.

In another preferable embodiment, the top member is shared between and connected to two support portions on opposite sides of the freight container. This way two support portions on opposite sides of the freight container can be locked to the same top element.

These and other aspects of the invention are apparent from and will be explained with reference to the embodiments described hereinafter:
In the drawings:
   - Fig. 1: is a schematic representation of a front view of an embodiment of the assembly system;
   - Fig. 2: is a schematic representation of a side view of the embodiment of the assembly system shown in Fig. 1;
   - Fig. 3: is a schematic representation of a perspective view of the embodiment of the assembly system shown in Fig. 1 and Fig. 2;
   - Fig. 4a: is a schematic representation of the side member according to the embodiment shown in Fig. 1 to 3 (front view);
   - Fig. 4b: is a schematic representation of the side member according to the embodiment shown in Fig. 1 to 3 (side view of a side facing the freight container when attached);
   - Fig. 4c: is a schematic representation of the side member according to the embodiment shown in Fig. 1 to 3 (perspective view);
   - Fig. 4d: is a schematic representation of details of the bottom portion of the side member;
   - Fig. 4e: is a schematic representation of details of the top portion of the side member;
   - Fig. 5a: is a schematic representation of a front view of the top member according to the embodiment shown in Fig. 1 to 3;
   - Fig. 5b: is a schematic representation of a side view of the top member according to the embodiment shown in Fig. 1 to 3;
   - Fig. 5c: is a schematic representation of a perspective view of the top member according to the embodiment shown in Fig. 1 to 3;
   - Fig. 5d: is a schematic representation of a perspective view of a detail of the end portion of the top member according to the embodiment shown in Fig. 1 to 3;
   - Fig. 6a: is a schematic side view of the vertical post according to the embodiment shown in Fig. 1 to 3 (view of side facing in the direction of the girders extend);
   - Fig. 6b: is a schematic front view of the vertical post according to the embodiment shown in Fig. 1 to 3 (view of side facing in the direction of the purlins extend);
   - Fig. 6c: is a schematic representation of the vertical post according to the embodiment shown in Fig. 1 to 3 (perspective view);
   - Fig. 6d: is a schematic representation of a detail of the bottom end portion of the vertical post (side view of side facing in the direction of the girders);
   - Fig. 6e: is a schematic representation of a detail of the bottom end portion of the vertical post (perspective view).

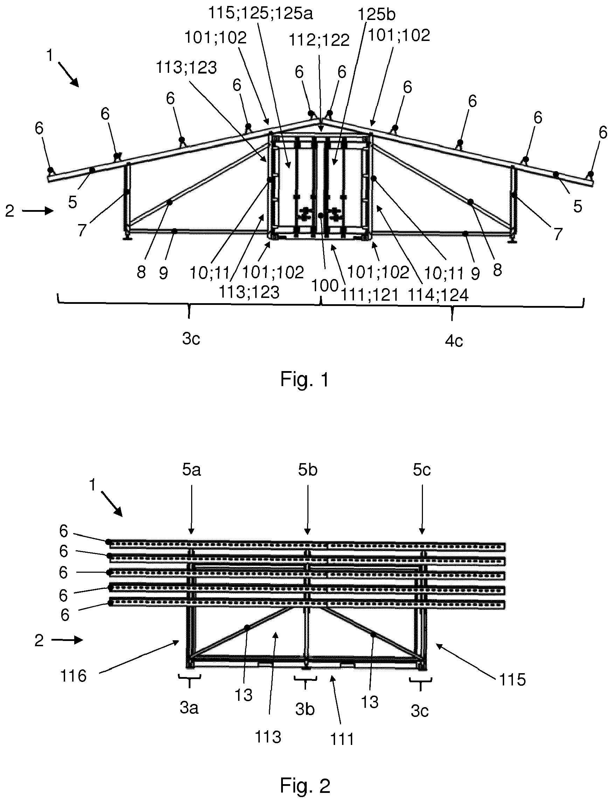

Fig. 1 shows a schematic representation of a front view of an embodiment of the assembly system 1. The assembly system 1 comprises an assembly frame 2, which is attached to a lateral side of a freight container 100.

The freight container 100 comprises a bottom side 111, a topside 112, lateral sides 113, 114, as well as a front side 115 and a rear side 116, which cannot be seen in Fig. 1. In other figures the rear side is marked with a reference numeral 116. The same technical features are referred to with the same reference numerals in all figures. The freight container 100 in Fig. 1 contains doors 125a, 125b at the front side 115. Preferably the sidewalls 123,124 at the lateral sides 113, 114 as well as the roof 122 at the topside 11 as well as a bottom wall 121 at the bottom side 111 and the end walls 125, 126 at the front side 115 and the rear side 116 or the respective leaves of the doors 125a, 125b are preferably made of steel sheets, most preferably of corrugated steel sheets.

The corners of the freight container comprise so-called corner castings 102 which each comprising a delegated opening at the respective lateral side as well as the front side or the rear side, respectively. These corner castings 102 are used to secure freight containers during transport on ships or trucks etc.

Visible in Fig. 1 are two support portions 3c, 4c of the assembly frame 2. Each of the support portions 3c, 4c comprises a girder 5, on top of which five purlins 6 each are arranged. Further, each of the support portions 3c, 4c comprises a vertical post 7, a diagonal cantilever 8, a horizontal cantilever 9, and a vertically oriented side member 10 with connecting means 11.

The vertically oriented side members 10 of the two support portions 3c, 4c are attached to the top and bottom corner castings 102 on each side of the freight container 100. The corner castings 102 function as complementary connecting means 101 to the connecting means 11 of the assembly frame 2 and lock the side members 10 tightly to the freight container 100.

The girders 5 of each support portion 3c, 4c are attached to the side member 10 of the respective support portion 3c, 4c and the vertical post 7 of the respective support portion 3c, 4c. The diagonal cantilevers 8 and the horizontal cantilevers 9 are arranged such that they form a triangle together with the respective side member 10. In the embodiment shown they are directly attached each to the vertical post 7. Due to the triangular construction there is no need for any foundations nor for any ballast.

On top of the purlins 6 photovoltaic panels (no shown) can be mounted. The assembly system 1 has the advantage that already-present complementary connecting means 101 of the freight container 100 are used and hence modification of the freight container 100, such as welding components of the assembly system 1 to the freight container 100, is not required. The parts of the assembly frame 2 can be easily mounted and dismounted to/from the freight container 100, such that a flexible system for mounting photovoltaic panels is provided.

Fig. 2 shows a schematic representation of a side view of the embodiment of the assembly system 1 shown in Fig. 1. Equal reference numerals represent equal elements.

Three support portions 3a, 3b, 3c, the girders 5a, 5b, 5c of each support portion 3a, 3b, 3c, and the five purlins 6, which connect the support portions 3a, 3b, 3c are visible. Adjacent ones of the support portions 3a, 3b, 3c are connected to each other by brackets 13. The brackets 13 provide additional stability to the assembly frame 2 against wind loads charging on the assembly system 1 and/or the freight container 100.

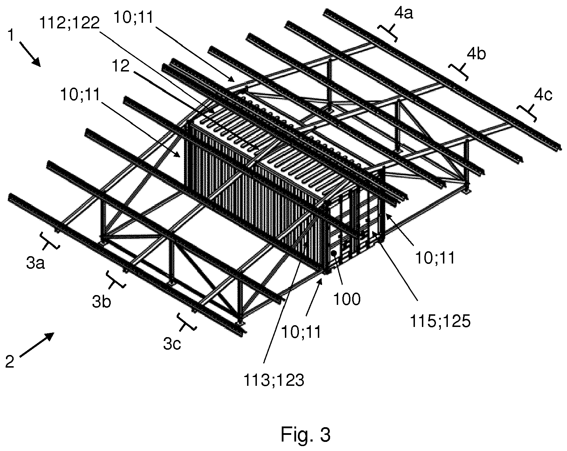

Fig. 3 depicts a schematic representation of a perspective view of the embodiment of the assembly system 1 shown in Fig. 1 and Fig. 2. The assembly frame 2 is attached to the freight container 100, which in this example is a standard intermodal freight container 100. There are three support portions 3a, 3b, 3c, 4a, 4b, 4c on each lateral side of the freight container 100. The end support portions 3a, 3c, 4a, 4c at the end comprise side members 10 whereas the intermediate support portions 3b, 4b in the middle do not comprise side members 10 but are attached to roof top end portions of the freight container 100 and are interconnected by a top member 12 running across the roof top of the freight container 100. The assembly system 1 provides a flexible and stable system for mounting photovoltaic panels.

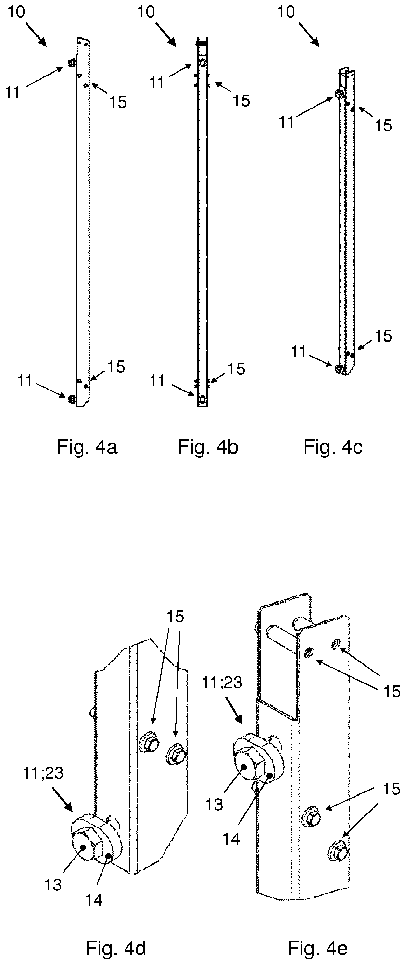

Figures 4a, 4b and 4c show schematic representations of the side member 10 according to the embodiment shown in Fig. 1 to 3. Fig. 4a depicts a front view, Fig. 4b a side view of the side facing the freight container when attached, and Fig. 4c a perspective view. The side member 10 comprises connecting means 11 in the top and the bottom portion, respectively. The connecting means 11 can be connected to complementary connecting means of the freight container. In the embodiment described the complementary connecting means are the corner castings of the freight container.

The connecting means 11 are shown in detail in Figures 4d and 4e. Fig. 4d depicts the bottom portion of the side member 10 and Fig. 4e the top portion of the side member 10. The connecting means 11 in each case comprise a locking element 23 which can be attached and locked to the corresponding corner casting of the freight container. The locking element 12 comprises a screw 13 and an oval disc 14.

The corner castings of freight containers have an oval-shaped opening used for attaching lock units of lashing when transporting the freight containers. The oval discs of the locking elements are rotated such that they can be inserted into these oval-shaped openings. After insertion, the oval discs are rotated by 90° such that they can be engaged with the respective corner casting, in the present embodiment by tightening a screw. The oval disc 14 of the bottom portion (Fig. 4d) is inserted into and locked to the bottom corner casting of the freight container and the oval disc 14 of the top portion (Fig. 4e) is inserted into and locked to the top corner casting of the freight container, such that the side member is tightly locked to the respective corner post of the container assembly frame of the freight container.

The side members comprise further connecting elements 15 for connecting the other elements of the assembly frame, such as the girders and the horizontal and diagonal cantilevers.

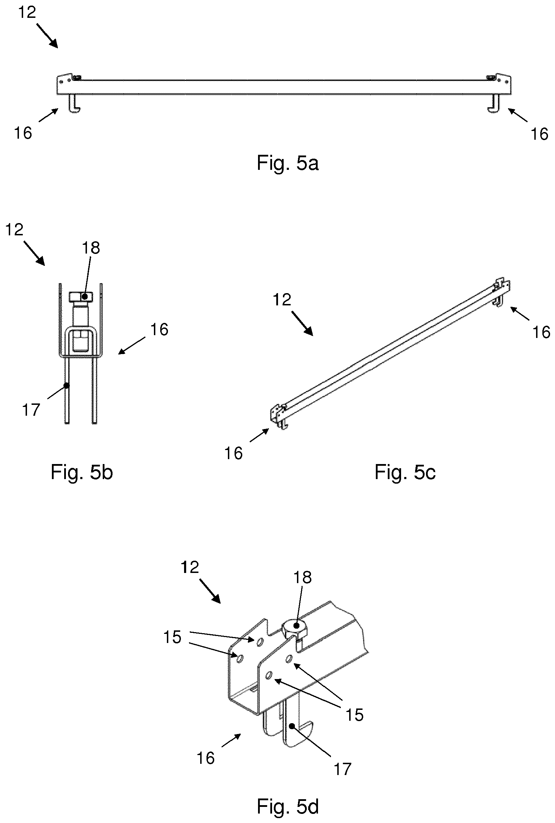

Figures 5a, 5b, 5c, and 5d show schematic representations of the top member 12 according to the embodiment shown in Fig. 1 to 3. Fig. 5a shows a front view, Fig. 5b a side view, Fig. 5c a perspective view, and Fig. 5d a detail of the end portion of the top member 12.

The top member 12 comprises fastening means 16 which can be engaged with roof top end portions alongside the freight container. The fastening means 16 comprise a hook 17 which can be fastened to the roof top end portions on each lateral side of the freight container by tightening an adjustable screw 18.

The top member 12 is shared between and connected to two support portions, preferably intermediate support portions, on opposite sides of the lateral sides of the freight container (conf. intermediate support portions 3b, 4b in Fig. 3). The top member 12 comprises further connecting elements 15 for connecting with the girders of the intermediate support portions.

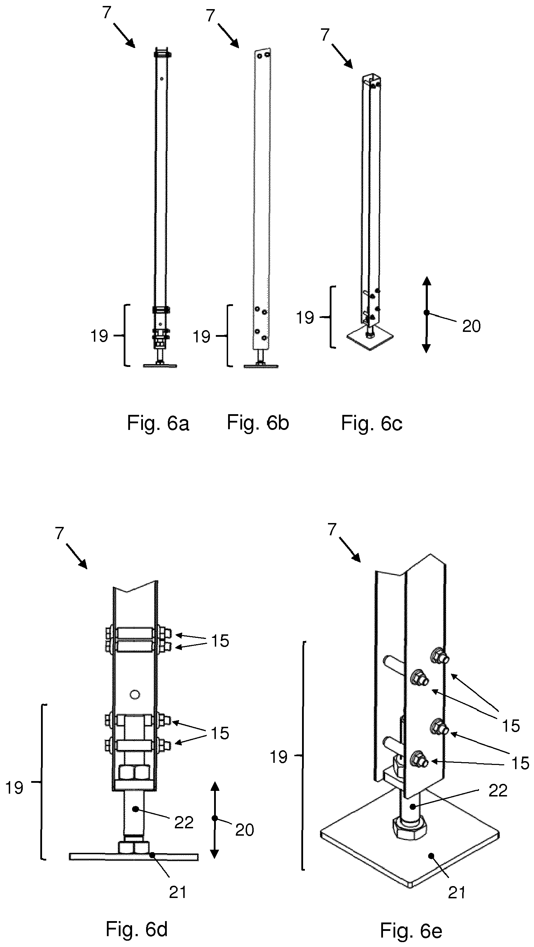

Figures 6a, 6b, 6c, 6d, and 6e show schematic representations of the vertical post 7 according to the embodiment shown in Fig. 1 to 3. Fig. 6a depicts a side view of a side facing in the direction the girders extend, Fig. 6b a side view of a side facing in the direction the purlins extend, Fig. 6c a perspective view, Fig. 6d a detail of the bottom end of the vertical post 7 in a side view of the side facing in the direction of the girders, and Fig. 6e a detail of the bottom end of the vertical post 7 in perspective view.

In the embodiment shown in the Figures 1 to 3, the bottom end of the vertical post 7 comprises an adjustable base 19. An extension of the adjustable base 19 can be adjusted with respect to a vertical direction 20. This can be used to adjust the vertical extension of the vertical post 7 of each support portion of the assembly frame to a specific level of the ground underneath the respective vertical post 7. This way, the support portions and the assembly frame can be adapted to uneven terrain, such that leveling and stability of the assembly system can be easily achieved, even in rural and less developed areas.

The bottom end of the vertical post 7 comprises a base plate 21 which is attached to a rod 22 which can be extended in the vertical direction 20 by rotating it around its axis.

The bottom end of the vertical post 7 comprises further connecting elements 15 for connecting the horizontal and diagonal cantilevers of the support portions.

### Reference numerals

- 1: assembly system
- 2: assembly frame
- 3a, 3b, 3c: portion
- 4a, 4b, 4c: portion
- 5: girder
- 6: purlin
- 7: vertical post
- 8: diagonal cantilever
- 9: horizontal cantilever
- 10: side member
- 11: connecting means
- 12: top member
- 13: bracket
- 14: oval disc
- 15: connecting element
- 16: fastening means
- 17: hook
- 18: screw
- 19: adjustable base
- 20: vertical direction
- 21: base plate
- 22: rod
- 23: locking element
- 100: freight container
- 101: complementary connecting means
- 102: corner casting
- 111: bottom side
- 112: topside
- 113, 114: lateral sides
- 115: front side
- 116: we are side
- 121: bottom wall
- 122: roof
- 123, 124: sidewalls
- 125: end wall (front side)
- 125a, 125 b: doors (front side)
- 126: end wall (rear side)

## Claims

1. Assembly system (1) for mounting photovoltaic panels,
with an assembly frame (2), wherein said assembly frame (2) comprises connecting means (11) by which the assembly frame (2) is attachable to at least one complementary connecting means (101) of a freight container (100).

2. Assembly system (1) according to claim 1, **characterized in that** the assembly frame (2) comprises multiple support portions (3a, 3b, 3c, 4a, 4b, 4c), wherein each support portion (3a, 3b, 3c, 4a, 4b, 4c) comprises at least one girder (5).

3. Assembly system (1) according to claim 2, **characterized in that** at least one of the support portions (3a, 3c, 4a, 4c) has a vertically oriented side member (10) on which at least some of the connecting means (11) are arranged, and wherein said connecting means (11) have at least one locking element (23) which can be attached and locked to a corner casting (102) of the freight container (100).

4. Assembly system (1) according to claim 3, **characterized in that** the at least one locking element (23) comprises at least one oval disc (14), wherein said oval disc (14) can be inserted into and locked to the correspondent corner casting (102) of the freight container (100).

5. Assembly system (100) according to any one of claims 3 or 4, **characterized in that** the at least one support portion (3a, 3c, 4a, 4c) further comprises at least one cantilever (8, 9) attached to the side member (10) and which is extending sideward from the side member (10) and the freight container (100).

6. Assembly system according to claim 5, **characterized in that** one of the at least one cantilever (8, 9) is attached to a top portion of the side member (10) and another of the at least one cantilever (8, 9) is attached to a bottom portion of the side member (10), wherein opposite ends of the two cantilevers (8, 9) are arranged, such that a triangle or triangle-like shape is formed by the two cantilevers (8, 9) and the side member (10).

7. Assembly system (1) according to any one of preceding claims, **characterized in that** at least two of the support portions (3a, 3b, 3c, 4a, 4b, 4c) are connected and attached to each other by at least one purlin (6).

8. Assembly system (1) according to any one of the claims 2 to 7, **characterized in that** each of the support portions (3a, 3b, 3c, 4a, 4b, 4c) comprises a vertical post (7), wherein the vertical post (7) is attached to the corresponding girder (5).

9. Assembly system according to claim 8, **characterized in that**, a bottom end of the vertical post (7) comprises an adjustable base (19), wherein an extension of said adjustable base (19) can be adjusted with respect to a vertical direction (20).

10. Assembly system (1) according to claim 8 or 9, **characterized in that** the vertical posts (7) of adjacent support portions (3a, 3b, 3c, 4a, 4b, 4c) are connected to each other by at least one bracket (13).

11. Assembly system (1) according to any one of claims 5 to 10, **characterized in that** in said one of the at least one cantilever (8, 9) and/or said another of the at least one cantilever (8, 9) are dimensioned such that the assembly system can withstand push and pull forces induced by wind without the need of foundations and without the need of ballast.

12. Assembly system (1) according to any one of claims 2 to 11, **characterized in that** at least one of the support portions (3b, 4b) comprises at least one top member (12), said top member (12) comprising fastening means (16) which can be engaged with at least one roof top end portion alongside the freight container (100).

13. Assembly system (1) according to claim 12, **characterized in that** the fastening means (16) of said at least one top member (12) comprises a hook (17) which can be fastened to the at least one roof top end portion of the freight container (100) by an adjustable screw (18).

14. Assembly system (1) according claim 12 or 13, **characterized in that** the top member (12) is shared between and connected to two support portions (3b, 4b) on opposite sides of the freight container (100).

15. Method of providing an assembly system (1) for mounting photovoltaic panels, comprising the steps of:
assembling and attaching an assembly frame (2) to a freight container by attaching connecting means (11) of the assembly frame (2) to at least one complementary connecting means (101) of the freight container (100).
